# EUROPEAN PATENT APPLICATION

(11) **EP 0 706 757 A1**
(43) Date of publication of application: **17.04.1996**
(21) Application number: 95307208.9
(22) Date of filing: 11.10.1995
(51) Int. Cl.: A01K 97/11

(54) **A fishing accessory**

(30) Priority: 11.10.1994 ZA 9407925; 15.09.1995 ZA 9507784
(71) Applicant: FISHER STRIKE INVESTMENT HOLDINGS (PROPRIETARY) LIMITED, Sandton, Transvaal Province (ZA)
(72) Inventor: Jacobs, Johannes Matthys, Brakpan, Transvaal Province (ZA); Loureiro, Jose Carlos Do Rego, Johannesburg, Transvaal Province (ZA)
(74) Representative: BROOKES & MARTIN

(57) **Abstract**

A fishing accessory (10) comprises a base and a bracket (12) pivotally mounted on the base (16), for retaining a fishing rod (14) in position. The bracket (12) is movable to enable the rod (14) to be displaced from an armed position to a rest position, thereby performing a striking action. An elastic member (46) is connected between the bracket (12) and the base (16) and is held in an extended position by means of an over-centre mechanism (48) when the rod (14) is in the armed position. The over-centre mechanism (48) is activated when a pulling force is exerted on a fishing line (78) attached to the rod (14), thereby releasing the elastic member (48) to displace the rod (14) to perform the striking action.

## Description

### FIELD OF THE INVENTION

This invention relates to a fishing accessory and, more particularly, to a fishing accessory which is operable to set a hook in the mouth of a fish which has taken bait or a trolled lure.

### BACKGROUND TO THE INVENTION

It is well known for a fisherman to strike his fishing rod when detecting that a fish has taken bait on the hook of his fishing line. The striking action of the fishing rod operates to set the fishing hook securely into the mouth of the fish.

A problem commonly experienced by a fisherman is in detecting the presence of a fish which has taken the bait on the hook, particularly in circumstances where the fish are slow-biting or where the fisherman is not holding the fishing rod in his hands.

Various prior art devices are known which address this problem. In particular, US Patent No 5,050,333 discloses a fishing rig with a fishing rod support and a triggering mechanism to release a flag and staff when a pulling force is exerted on the fishing line, thereby alerting the fisherman that a fish has taken the bait.

French Patent No 9.001.490 teaches a support for a fishing rod which is held in an elevated position and which enables the rod to be lowered when a pulling force is exerted on the fishing line. The support is equipped with an alarm system which is triggered when the fishing rod is in the lowered position.

Both of these prior art disclosures have a disadvantage in that they merely indicate the presence of a fish which has taken the bait. The fisherman is then required to take up the fishing rod to strike it, and to land the fish by hand. The fish may release the bait in the time interval between the indication and the hand operation of the rod by the fisherman.

British Patent GB 2.275.857 overcomes this difficulty by disclosing a fishing rod holder which, in addition to indicating the presence of a fish which has taken the bait, strikes the fishing rod when pressure is exerted on the fishing line.

This disclosure also has a disadvantage in that the triggering mechanism is complex involving the action of a plurality of pins. Consequently this apparatus is cumbersome and is difficult to use.

### OBJECT OF THE INVENTION

It is an object of this invention to provide a novel fishing accessory of this type.

### SUMMARY OF THE INVENTION

In accordance with this invention, there is provided a fishing accessory, comprising :
a support means for supporting a fishing rod in an armed position;
a displacement means for displacing the fishing rod from the armed position to a rest position to cause the rod to perform a striking action; and
an over-centre lever mechanism acting on the displacement means and responsive to a pulling force exerted on a fishing line attached to the fishing rod to activate the displacement means to displace the rod from the armed position to the rest position.

Further features of the invention provide for the support means to include a base and a bracket for retaining the fishing rod in position, for the bracket to be pivotally mounted on the base to enable the rod to be displaced from the armed position to the rest position, for the armed position to correspond to the fishing rod in a substantially horizontal position, and for the rest position to correspond to the fishing rod inclined at an acute angle relative to a horizontal line.

Still further features of the invention provide for the displacement means to be an elastic member arranged between the bracket and the base, for the elastic member to be a rubber strap, alternatively a coil spring, and for the elastic member to be in an extended state when the rod is in the armed position, and in a relaxed state when the rod is in the rest position.

Preferably, the over-centre lever mechanism pivotally connects the bracket and the base, the over-centre lever mechanism is pivotally movable between a first configuration in which the rod is in the armed position, and a second configuration in which the rod is in the rest position, the rod is releasably locked in the armed position when the over-centre lever mechanism is in the first configuration, the over-centre lever mechanism has an equilibrium point between the first configuration and the second configuration, the over-centre lever mechanism is movable from the equilibrium point to the second configuration under action of the elastic member, the support means is releasably locked in the armed position when the over-centre lever mechanism is in the first configuration, and the base includes a stop member to stop the over-centre lever mechanism in the first configuration.

Yet further features of the invention provide for the over-centre lever mechanism to include a guide means for guiding the fishing line therethrough, for the over-centre lever mechanism to be drawn from the stop past the equilibrium point by the fishing line when a predetermined tension is exerted on the line, for the predetermined tension to be a function of the stiffness of the elastic member and the position of the stop, and for the stop member to be adjustable to enable a user to adjust the predetermined tension.

There is also provided for the bracket to be elongate with the elastic member being attached to a first end thereof, for the bracket to have a retaining formation defined thereon proximate the first end of the bracket to retain a handle of the fishing rod in position, for the bracket to have a support formation defined thereon proximate a second end thereof to support the rod at a position removed from the handle of the rod, for the retaining formation to include at least one quick release fastener for releasing the handle, and for the quick release fastener to be a velcro strap, alternatively an elastic band and hook arrangement.

There is further provided for the base to include at least one sharpened point so that the base can be urged, at least partially, into the ground, for the base to include a stabiliser proximate the at least one sharpened point to counteract the forces exerted on the base during the execution of a striking action, for the accessory to include an annunciator which is activatable when the rod is in the rest position, for the annunciator to be an audible annunciator, for the over-centre lever mechanism to include a safety catch for locking the rod in the armed position, for the base to be made of metal, preferably galvanised steel, and for the bracket and the over-centre lever mechanism to be injection moulded from a plastics material.

### BRIEF DESCRIPTION OF THE DRAWING

A preferred embodiment of the invention is described below, by way of example only, and with reference to the accompanying drawings in which :
Figure 1 is a side view of a fishing accessory in accordance with the invention;
Figure 2 is a perspective view of the fishing accessory of Figure 1 shown in conjunction with a fishing rod in an armed position; and
Figure 3 is a perspective view of the fishing accessory of Figure 1 shown in conjunction with a fishing rod in a rest position.

### DETAILED DESCRIPTION OF THE INVENTION WITH REFERENCE TO THE DRAWING

In the drawings, in which like features of the invention are indicated by like numerals, reference numeral (10) generally indicates a fishing accessory in accordance with the invention.

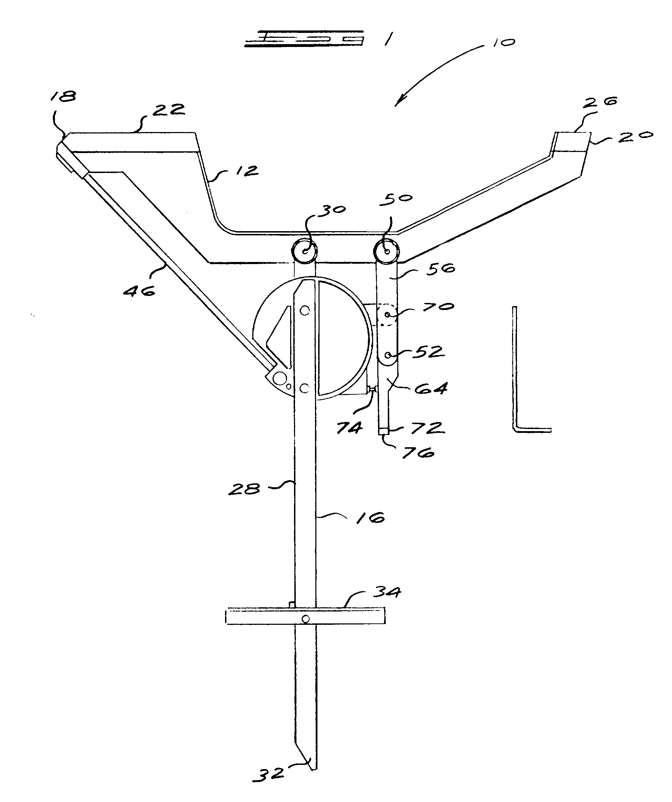

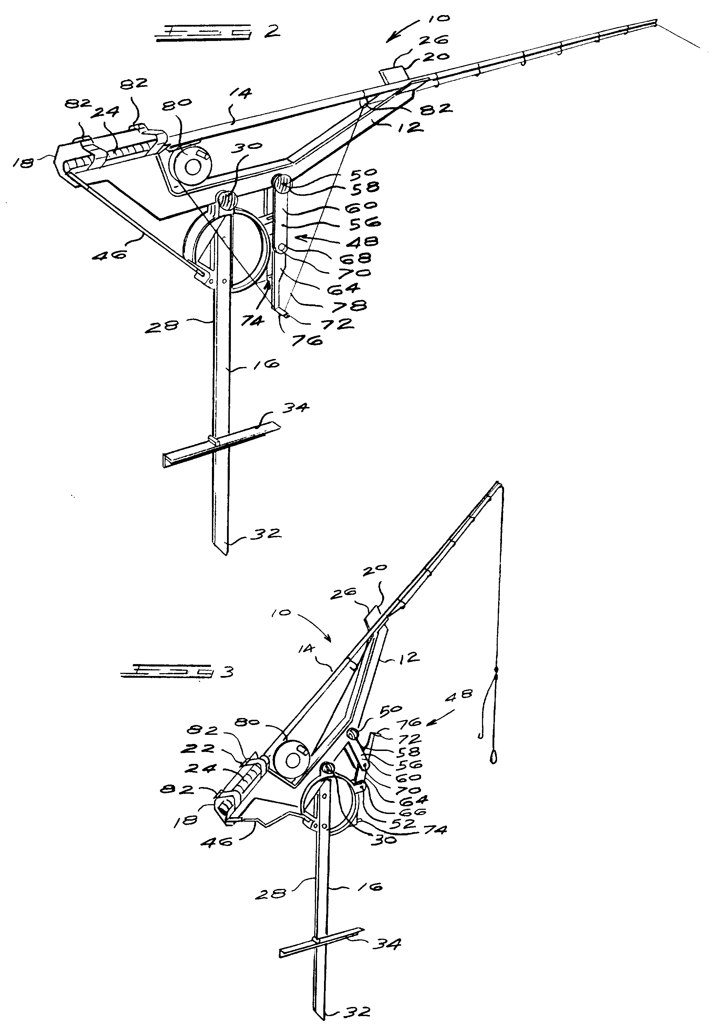

The fishing accessory (10) includes a support means in the form of a suitable bracket (12) for retaining a fishing rod (14) in position. The bracket (12) is pivotally mounted on a base (16) so that the bracket (12) can pivot to displace the rod (14) from an armed position indicated in Figure 2 to a rest position indicated in Figure 3.

The armed and rest positions are such that when the rod (14) is in the armed position, the rod (14) is substantially horizontal and when the rod (14) is in the rest position, the rod (14) is oriented at a suitable acute angle relative to a horizontal line.

The bracket (12) is elongate and has a first end (18) and a second end (20). The bracket (12) has a retaining formation (22) defined proximate the first end (18). The retaining formation (22) serves to retain a handle (24) of the fishing rod (14) in position. A support formation (26) is defined proximate the second end (20) to support the rod (14) at a position along the length of the rod (14).

The base (16) includes a first elongate member (28) one end of which is pivotally connected to the bracket (12) at a first pivot point (30). The other end of the member (28) has a sharpened point (32) which can be driven into the ground. A stabiliser (34) in the form of a second elongate member normal to the first elongate member (28) is operable to stabilise the fishing accessory (10) when the first elongate member (28) is driven into the ground. A user can stand on the stabiliser (34) to facilitate the driving of the first elongate member (28) into the ground.

The bracket (12) and the base (16) are injection moulded from a plastics material. The elongate members (28) and (34) are of mild steel.

The accessory (10) also includes a displacement means in the form of an elastic member (46) such as a rubber strap, one end of which is connected to the retaining formation (22) and the other end of which is connected to the base (16). The rubber strap (46) has a spring constant of approximately 260 Nm⁻¹. The ratio of the relaxed length of the rubber strap (46) to its extended length is approximately 1:2,5. The rubber strap (46) is oriented such that when the rod (14) is in the armed position, the rubber strap (46) is extended to a length of 675 mm and when the rod (14) is in the rest position the rubber strap (46) is at its relaxed length of 275 mm.

The accessory (10) also includes an activating means in the form of an over-centre lever mechanism (48). The mechanism (48) is connected at a second pivot point (50) to the bracket (12) and at a third pivot point (52) to the base (16). The over-centre lever mechanism (48) thus pivotally connects the bracket (12) and the base (16).

The over-centre lever mechanism (48) includes a first lever arm (56) pivotally connected at a first end (58) thereof to the bracket (12) at the second pivot point (50). The second pivot point (50) is located between the first pivot point (30) and the second end (20) of the bracket (12). The first lever arm (56) comprises two injection moulded plastics plates (60) in an aligned formation but spaced away from each other.

A second injection moulded plastics lever arm (64), is pivotally connected to the base (16) at the third pivot point (52). The second lever arm (64) is pivotally received between the plates (60) and is connected to the plates (60) at a fourth pivot point (68). The fourth pivot point (68) is located at a second end (70) of the first lever arm (56). The fourth pivot point (68) is intermediate the third pivot point (52) and a second end (72) of the second lever arm (64).

As can be seen in Figures 2 and 3 respectively, the over-centre lever mechanism (48) is pivotally displaceable between a first configuration and a second configuration. In the first configuration, the rod (14) is in the armed position and in the second configuration, the rod (14) is in the rest position.

In the first configuration, which is shown in Figure 2, the first lever arm (56) and the second lever arm (64) are aligned and extend operatively downwardly from, and at right angles to, the bracket (12). When the mechanism (48) moves from the first configuration into the second configuration, the second lever arm (64) pivots through an angle of approximately 180° to permit the first lever arm (56) to move upwardly and the rod (14) to pivot into its rest position.

The mechanism (48) is such that, at a point between the first and second configurations, the mechanism (48) is at a point of equilibrium, i.e. its centre point. Thus, the mechanism (48) can move from the point of equilibrium into the second configuration under the action of the rubber strap (46).

It will be appreciated that the point of equilibrium will be found at a point within the range of movement of the second lever arm (64). The mechanism (48) thus includes a stop (74) threadedly mounted on the base (16). The stop (74) serves to abut the second lever arm (64) to lock the mechanism (48) in its first configuration and thus the rod (14) in its armed position.

It will be appreciated that, should a predetermined force be exerted on the second end (72) of the second lever arm (64) in a direction away from the stop (74), the second lever arm (64) will move through the point of equilibrium and thus into its second configuration under the action of the rubber strap (46).

The second lever arm (64) thus includes a guide means in the form of a U-shaped formation (76) arranged on the second end (72) of the second lever arm (64) . The U-shaped formation (76) opens operatively downwardly when the mechanism (48) is in its first configuration. A fishing line (78) extending from a fishing reel (80) is guided through the U-shaped formation (76) when the mechanism (48) is in its first configuration. The fishing line (78) extends from the U-shaped formation (76) through a first eye (82) of the fishing rod (14).

Thus, as can be seen from Figure 2, when a fish pulls on the fishing line (78) with sufficient force, the U-shaped formation (76) will be moved away from the stop (74). In this manner, the rod (14) will move from its first position to its second position under action of the rubber strap (46) to perform a striking action.

Since the stop (74) is threadedly mounted on the base (16), the position of the stop (74) can be adjusted so that the tension required in the fishing line (78) to cause the mechanism (48) to move from its first configuration into its second configuration can be adjusted.

It will be appreciated that when the over-centre lever mechanism (48) is in its first configuration, the over-centre lever mechanism (48) is relatively unstable. Hence, the plates (60) and the second lever arm (64) may have complementary apertures (not shown) through which a locking pin (not shown) is received to inhibit movement of the second lever arm (64) relative to the first lever arm (56) and thus the over-centre lever mechanism (48) from its first configuration to its second configuration. The locking pin and complementary apertures operate as a safety catch.

It is to be understood that the positions of the pivot points (30), (50), (52), (68) are of importance in the functioning of the accessory (10).

Since, during the transition of the over-centre lever mechanism from its first configuration, the second lever arm (64) moves at a relatively high speed, damage could arise to the second lever arm (64) should it strike the first lever arm (56). Thus, a rubber block may be arranged as a damper between the plates (60) to absorb the impact of the second lever arm (64). Alternatively, a foam rubber strip (84) may be inserted into a tapered groove on the base (16) to act as a damper to absorb the impact of the bracket (12).

Each pivot point (30), (50), (52), (68) is defined by respective pins received through complementary apertures defined in the relevant components.

In order to arm the fishing accessory (10), the second lever arm (64) is pivoted operatively downwardly by a user so that the second lever arm (64) moves past the point of equilibrium to abut the stop (74). The pin (not shown) is then urged through the complementary apertures (not shown). A user then casts fishing tackle attached to an end of the line (78) into the water. The fishing rod (14) is then placed in the retaining formation (22) and on the support formation (26). The line (78) is drawn downwardly from the fishing reel (80) and placed in the U-shaped formation (76). The pin (86) is then removed. When a fish bites a hook of the fishing tackle and pulls on the fishing line (78) so that said predetermined force is exerted on the U-shaped formation (76), the second lever arm (64) is moved away from the stop (76). This results in the mechanism (48) moving rapidly from its first configuration into its second configuration so that the rod performs the striking action to facilitate hooking of the fish.

It will be appreciated that the stabiliser (34) on the base (16) operates also to counteract the forces exerted on the base during the transition of the over-centre lever mechanism from its first configuration to its second configuration, thereby preventing the fishing accessory (10) from falling over during a striking action.

In order to facilitate the engagement and release of the fishing rod (14) and the bracket (12), the retaining formation (22) at the first end (18) of the bracket (12) is equipped with two quick release fasteners (82). The quick release fasteners may be velcro straps or, alternatively elastic band and hook arrangements.

In order to alert a user of the accessory (10) that the fishing rod (14) has performed a striking action, the base (16) is equipped with an audible annunciator (not shown) which is activated when the fishing rod is displaced to the rest position. The annunciator comprises a microswitch, a speaker which is powered by means of a battery. The first elongate member (28) is used to house the various annunciator components.

The pins in pivot points (30) and (50) may be removed and the ends of the rubber strap (46) may be detached from the bracket (12) and the base (16), respectively, to enable the bracket and base to be separated from each other. This renders the fishing accessory (10) dismantable for convenient storage.

The applicant believes that this invention provides a fishing accessory capable of executing a striking action which is usually carried out by a fisherman.

Further, the accessory obviates the need for a fisherman to continuously monitor his fishing rod.

## Claims

1. A fishing accessory, comprising :
a support means for supporting a fishing rod in an armed position;
a displacement means for displacing the fishing rod from the armed position to a rest position to cause the rod to perform a striking action; and
an over-centre lever mechanism acting on the displacement means and responsive to a pulling force exerted on a fishing line attached to the fishing rod to activate the displacement means to displace the rod from the armed position to the rest position.

2. A fishing accessory as claimed in claim 1 which includes a base and a bracket for retaining the fishing rod in position.

3. A fishing accessory as claimed in claim 2 in which the bracket is pivotally mounted on the base to enable the rod to be displaced from the armed position to the rest position.

4. A fishing accessory as claimed in any one of the preceding claims in which the armed position corresponds to the fishing rod in a substantially horizontal position.

5. A fishing accessory as claimed in any one of the preceding claims in which the rest position corresponds to the fishing rod inclined at an acute angle relative to a horizontal line.

6. A fishing accessory as claimed in claim 2 in which the displacement means is an elastic member arranged between the bracket and the base.

7. A fishing accessory as claimed in claim 6 in which the elastic member is a rubber strap.

8. A fishing accessory as claimed in claim 6 in which the elastic member is a coil spring.

9. A fishing accessory as claimed in any one of claims 6 to 8 in which the elastic member is in an extended state when the rod is in the armed position, and in a relaxed state when the rod is in the rest position.

10. A fishing accessory as claimed in claim 2 in which the over-centre lever mechanism pivotally connects the bracket and the base.

11. A fishing accessory as claimed in claim 10 in which the over-centre lever mechanism is pivotally movable between a first configuration in which the rod is in the armed position, and a second configuration in which the rod is in the rest position.

12. A fishing accessory as claimed in claim 11 in which the rod is releasably locked in the armed position when the over-centre lever mechanism is in the first configuration.

13. A fishing accessory as claimed in claim 12 in which the over-centre lever mechanism has an equilibrium point between the first configuration and the second configuration.

14. A fishing accessory as claimed in claim 13 in which the over-centre lever mechanism is movable from the equilibrium point to the second configuration under action of the elastic member.

15. A fishing accessory as claimed in claim 14 in which the support means is releasably locked in the armed position when the over-centre lever mechanism is in the first configuration.

16. A fishing accessory as claimed in claim 15 in which the base includes a stop member to stop the over-centre lever mechanism in the first configuration.

17. A fishing accessory as claimed in claim 16 in which the over-centre lever mechanism includes a guide means for guiding the fishing line therethrough.

18. A fishing accessory as claimed in claim 17 in which the over-centre lever mechanism is drawn from the stop past the equilibrium point by the fishing line when a predetermined tension is exerted on the line.

19. A fishing accessory as claimed in claim 18 in which the predetermined tension is a function of the stiffness of the elastic member and the position of the stop.

20. A fishing accessory as claimed in claim 19 in which the stop member is adjustable to enable a user to adjust the predetermined tension.

21. A fishing accessory as claimed in any one of claims 6 to 20 in which the bracket is elongate with the elastic member being attached to a first end thereof.

22. A fishing accessory as claimed in claim 21 in which the bracket has a retaining formation defined thereon proximate the first end of the bracket to retain a handle of the fishing rod in position.

23. A fishing accessory as claimed in claim 22 in which the bracket has a support formation defined thereon proximate a second end thereof to support the rod at a position removed from the handle of the rod.

24. A fishing accessory as claimed in claim 22 in which the retaining formation includes at least one quick release fastener for releasing the handle.

25. A fishing accessory as claimed in claim 24 in which the quick release fastener is a velcro strap.

26. A fishing accessory as claimed in claim 24 in which the quick release fastener is an elastic band and hook arrangement.

27. A fishing accessory as claimed in any one of claims 2 to 26 in which the base includes at least one sharpened point so that the base can be urged, at least partially, into the ground.

28. A fishing accessory as claimed in claim 27 in which the base includes a stabiliser proximate the at least one sharpened point to counteract the forces exerted on the base during the execution of a striking action.

29. A fishing accessory as claimed in any one of the preceding claims which includes an annunciator which is activatable when the rod is in the rest position.

30. A fishing accessory as claimed in claim 29 in which the annunciator is an audible annunciator.

31. A fishing accessory as claimed in any one of claims 2 to 30 in which the over-centre lever mechanism includes a safety catch for locking the rod in the armed position.

32. A fishing accessory as claimed in any one of claims 2 to 31 which includes a damper which is secured to the base to absorb the impact of the bracket during a striking action.

33. A fishing accessory as claimed in any one of claims 2 to 31 in which the stabiliser is made of metal.

34. A fishing accessory as claimed in claim 33 in which the metal is mild steel.

35. A fishing accessory as claimed in any one of claims 2 to 34 in which the bracket, the base and the over-centre lever mechanism are injection moulded from a plastics material.

36. A fishing accessory substantially as herein described with reference to and as illustrated in the accompanying drawings.
